# EUROPEAN PATENT SPECIFICATION

(11) **EP 0 806 559 B1**
(45) Date of publication and mention of the grant of the patent: **27.03.2002**
(21) Application number: 97107032.1
(22) Date of filing: 28.04.1997
(51) Int. Cl.: F02D 17/02

(54) **Method of controlling the operation of an internal combustion engine of the two-stroke cycle and direct fuel injection type and internal combustion engine**
Verfahren zur Steuerung des Betriebs einer direkteinspritzenden Zweitaktbrennkraftmaschine
Procédé de contrôle du fonctionnement d'un moteur à combustion interne deux temps et à injection directe

(30) Priority: 26.04.1996 JP 10825296
(43) Date of publication of application: 12.11.1997
(73) Proprietor: YAMAHA HATSUDOKI KABUSHIKI KAISHA, Iwata-shi Shizuoka-ken, 438 (JP)
(72) Inventor: Suzuki, Takahiro, Iwata-shi, Shizuoka-ken (JP); Takeo, Yoshida, Iwata-shi, Shizuoka-ken (JP)
(74) Representative: Grünecker, Kinkeldey, Stockmair & Schwanhäusser Anwaltssozietät

(56) References cited:
- WO-A-89/09872
- US-A- 4 991 558
- US-A- 5 038 739
- US-A- 5 097 811
- US-A- 5 259 344

## Description

This invention relates to a method of controlling the operation of an internal combustion engine of the two-stroke cycle and direct fuel injection type according to the preamble of claim 1 and to an internal combustion engine of the two-stroke cycle and direct fuel injection type according to the preamble of claim 11.

Such a method of controlling the operation of an internal combustion engine of the two-stroke cycle and direct fuel injection type and such an internal combustion engine of the two-stroke cycle and direct fuel injection type is known from prior art document US 4,991,558. Said prior art document teaches a multiple cylinder two-stroke fuel injection internal combustion engine, which is operated at idle by interrupting the fuel injection stages in a predetermined pattern, such that over a certain number of crankshaft revolutions a fewer number of injections occurs than over the same number of revolutions at non-idle. The quantity of fuel injected per injection is increased relative to that required to operate the engine at idle without any injection interruptions. To maintain the power necessary to operate the engine at idle, the amount of fuel injected per injection is increased over that which would otherwise be required. Within the idle mode, where the fuel injection is interrupted, each combustion event must deliver more power output than would otherwise be the case. Thus, spark timing can be advanced to improve combustion efficiency.

As a method for improving combustion in 2-cycle engines in which fuel is directly injected into cylinders (in-cylinder injection type) at low loads, stratified combustion or intermittent injection is widely known. The term intermittent injection as used herein refers to a type for injecting fuel into each cylinder not in every cycle but once in plural number of cycles.

In such fuel injected 2-cycle engines, it is important for improving performance of the engine to stabilize combustion by forming uniform mixture by facilitating mixture of fuel and fresh air in the cylinder.

When the intermittent injection described above is employed to improve combustion in fuel injected 2-cycle engine at low loads, it is necessary to increase the number of cycles without injection. This means the number of cycles without fuel injection, and its value is calculated by subtracting one from the number of cycles for on injection. For instance, when one fuel injection is made in every three cycles, the number of cycles without injection will be two. If fuel amount for one injection (duration of fuel injection) increases, carburetion of injected fuel takes more time. It causes difficulty in ignition of fuel, and the engine moves on to exhaust stroke without fuel being combusted completely. So, the fuel economy becomes poor and exhaust gas characteristics worsen.

Accordingly, it is an objective of the present invention to provide an improved method of controlling the operation of an internal combustion engine as indicated above capable of improving vapourization and mixing of fuel at least at low load engine operating conditions and simultaneously improving exhaust gas characteristics and fuel economy at least in low load engine operating conditions.

According to the present invention, this objective is solved by a method as indicated above, wherein the fuel injection start timing is variably controlled below said first load boundary such that the fuel injection start timing is advanced with respect to the fuel injection start timing above said first load boundary.

In that case, it is advantageous when the exhaust timing is controlled such that the exhaust timing below said first load boundary is delayed with respect to the exhaust timing above said first load boundary.

In order to further enhance the fuel economy, it is advantageous when the number of cycles without fuel injection below the first load boundary is increased with the decrease in the load, and that the exhaust timing is delayed with the increase in the number of cycles without fuel injection.

It is a further objective of the present invention to provide an improved internal combustion engine as indicated above which is capable of improving vapourization and mixing of fuel at least at low load engine operating conditions and simultaneously improving exhaust gas characteristics and fuel economy at least in low load engine operating conditions.

According to the present invention, this further objective is solved by an internal combustion engine as indicated above, wherein the fuel injection start timing is variably controllable below said first load boundary such that the fuel injection start timing is advanced with respect to the fuel injection start timing above said first load boundary.

According to a preferred embodiment of the present invention, it is advantageous when the exhaust timing is controllable by an exhaust control valve such that the exhaust timing below said first load boundary is delayed with respect to the exhaust timing above said first load boundary.

In this case, it is advantageous when the number of cycles without fuel injection below the first load boundary is increasable with the decrease in the load, and that the exhaust timing is delayable with the increase in the number of cycles without fuel injection.

Thus, in this invention, fuel injection starting timing is advanced while amount of injection fuel by one cycle is rich at low load because the intermitten injection is carried out, so that vaporization of injected fuel is improved and uniform mixture is formed as a result. The mixture is easily fired so that all of the injected fuel is more completely fired before the beginning of the exhaust stroke, and the incompletely burned fuel exhausted at the exhaust stroke decreases so that exhaust emission, fuel economy and engine performance are improved.

Further more, the closing timing of the exhaust port directly before compression stroke is advanced so that injected fuel rarely flows away with fresh air through the exhaust port at the scavenging stroke, and as the result of advancing the closing timing, the opening timing of the exhaust port directly before the compression stroke is delayed so that the mixture of fuel and air burns more completely. Owing to these two features, exhaust emission, fuel economy and engine performance are improved.

Other preferred embodiments of the present invention are laid down in further dependent claims.

In the following, the present invention is explained in greater detail with respect to several embodiments thereof in conjunction with the accompanying drawings, wherein:
FIG. 1 is a side cross-sectional view of main part (engine part) of a motor cycle carrying a fuel injected 2-cycle engine as an embodiment of the present invention;
FIG. 2 is a schematic plan view of the same 2-cycle engine;
FIG. 3 is a longitudinal cross-sectional view of an upper section of the 2-cycle engine;
FIG. 4 is a lateral cross-sectional view of the 2-cycle engine;
FIG. 5 is a view showing locations and size of injector nozzles;
FIG. 6 is a flow chart showing flows of fuel and fresh air in the 2-cycle engine;
FIG. 7 is a block diagram showing main structure of a control system in the 2-cycle engine;
FIG. 8 is a timing chart showing opening and closing timings of scavenging and exhaust ports during a combustion cycle;
FIG. 9 is timing charts showing fuel injection and ignition timings at low loads;
FIG. 10 is a graph showing load and number of cycles without injection against the engine revolution with exhaust timing and throttle opening as parameters;
Fig. 11 is a timing chart showing fuel injection condition and exhaust port opening timing plotted against throttle opening;
Fig 12 is a schematic sectional side elevation of a 2-cycle engine of an another embodiment;
Fig. 13 is a graph similar to that of Fig. 10 for further explanation;
Fig. 14(A) is a diagram of one embodiment showing the relation between the throttle opening, number of thinned out injection cycles, and the injection timing for one fuel injection for one injecting crankshaft revolution at a constant engine speed; and
Fig. 14(B) is a diagram of another embodiment showing the relation between the throttle opening, number of thinned out injection cycles, and injection timings for a plurality of fuel injections in one injecting crankshaft revolution at a constant engine speed.

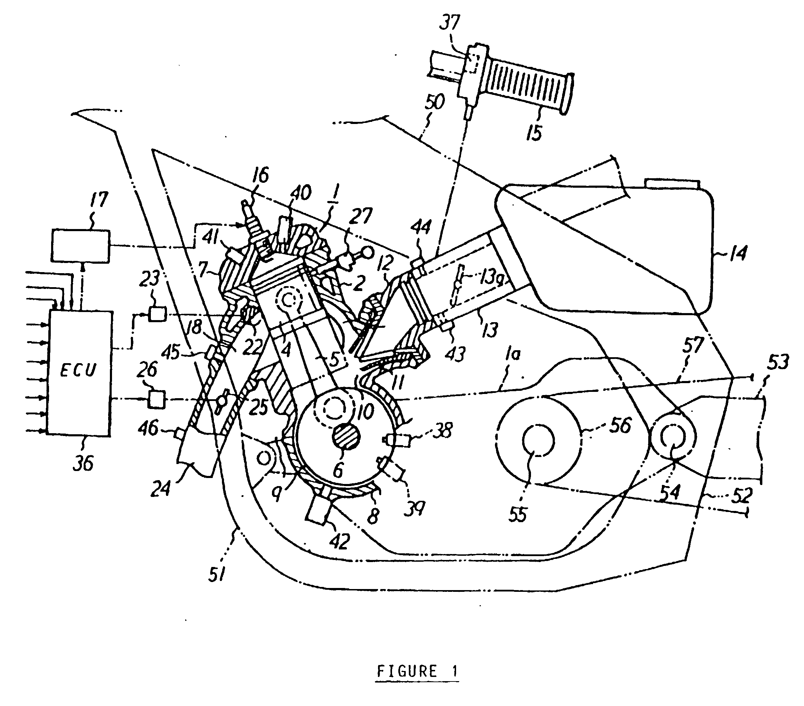

As showing in FIG. 1, a fuel injected 2-cycle engine 1 relating to the embodiment of the invention is disposed in a space surrounded by a main frame 50, down tubes 51, and a rear arm bracket 52 of the motor cycle. On the rear arm bracket 52, front end of a rear arm 53 is pivoted for swinging up and down with a pivot 54, and a rear wheel (not shown) is rotatably supported at he rear end of the rear arm 53. A sprocket 56 is coupled to an output shaft 55 projecting to one side of a transmission case 1a of the 2-cycle engine 1. Endless chain 57 is disposed between the sprocket 56 and a sprocket coupled to a rear wheel shaft (not shown).

The structure of the fuel injected 2-cycle engine relating to the present invention will now be described.

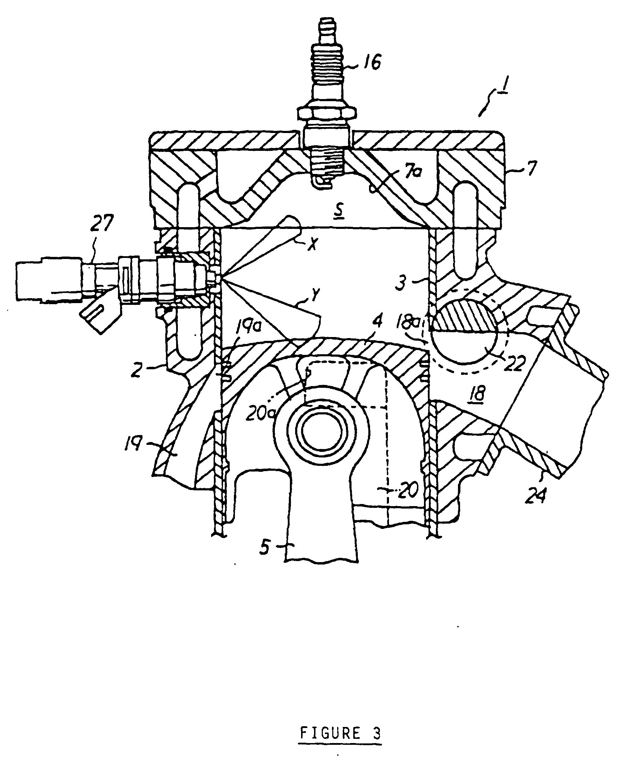

The 2-cycle engine 1 relating to the embodiment of the invention is a 3-cylinder engine. Each of the cylinders 3 (see FIG. 3) is formed in each cylinder body 2 and a piston 4 is slidably fitted for up and down movement in each cylinder 3. Each piston 4 is connected to a crank shaft 6 trough a connecting rod 5.

A cylinder head 7 is mounted on the upper part of each cylinder body 2, and a crankcase 8 is mounted on the bottom part of the cylinder body 2. The crank shaft 6 is stored for rotation in a crank chamber 9 formed in the crankcase 8. A reed valve 11 is provided at an inlet port 10 opening toward rear of the vehicle, and an inlet manifold 12, a throttle body 13 and an intake silencer 14 are connected in that order. A throttle valve 13a is disposed in a throttle body 13 to be opened and closed by throttle operation through a throttle grip 15.

As shown in FIG. 3. a combustion recess 7a is formed in the cylinder head 7, and a combustion chamber S is defined by the combustion recess 7a, the cylinder 3 and the piston 4. A spark plug 16 is screwed in the cylinder head 7, and the spark plug 16 is electrically connected to an ignition circuit 17 shown in FIG. 1.

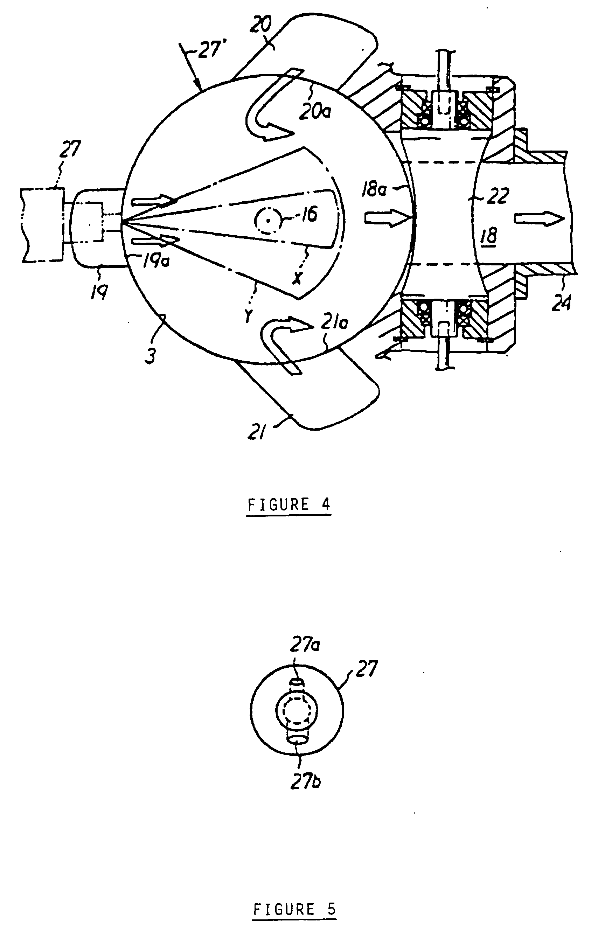

One exhaust passage 18 and three scavenging passages 19, 20 and 21 (see FIG. 4) are formed in the cylinder of each cylinder body 2. Each end of these exhaust passage 18 and scavenging passages 19, 20 and 21 is open to the inside of the cylinder 3 as scavenging ports 19a, 20a and 21a. respectively. The other end of each scavenging passages 19 through 21 is open to the inside of the crank chamber 9.

The scavenging passage 19 is formed in a location opposite to the exhaust passage 18, and the other scavenging passages 20 and 21 are formed on both right and left sides of a line interconnecting the exhaust passage 18 and the scavenging passage 19. The scavenging port 19a is open toward the exhaust port 18a, and the other scavenging ports 20a and 21a are open toward the scavenging port 19a.

On the top part of each exhaust passage 18, a rotary exhaust control valve 22 for controlling the exhaust timing is provided as shown in FIGs 1, 3 and 4.

Each exhaust control valve 22 described above is formed into hourglass shape as shown in the FIG. 4, and a part of the valve is cut out and to have a semicircular cross section as shown in FIG. 3. Each of the exhaust control valve 22 is rotated to be opened and closed (FIG. 3 shows fully opened state) by a servo motor 23 shown in FIG. 1. The exhaust control valve 22 and the servo motor 23 constitute an exhaust timing control device.

As shown in FIG. 1 and FIG. 4. an exhaust pipe 24 communicating with each of the exhaust passages 18 is connected to the cylinder body 2, and an exhaust valve 25 (see FIG. 1) is disposed in each exhaust pipe 24. Each of the exhaust valves 25 is driven to be opened and closed by the servo motor 26 shown in FIG. 1.

Furthermore, as shown in FIG. 1 and FIG. 4, an injector 27 is mounted horizontally at a position above the scavenging passage 19 in the cylinder body 2 of each cylinder, with the fore-end of the injector directed toward the exhaust port 18a. In the fore-end of the injector 27 are formed a small fuel injection hole 27a opening upwardly and a large fuel injection hole 27b opening downwardly toward combustion chamber S as shown in FIG. 5.

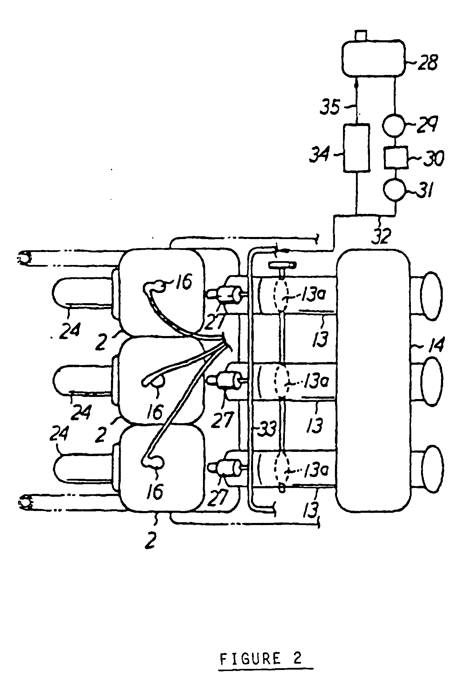

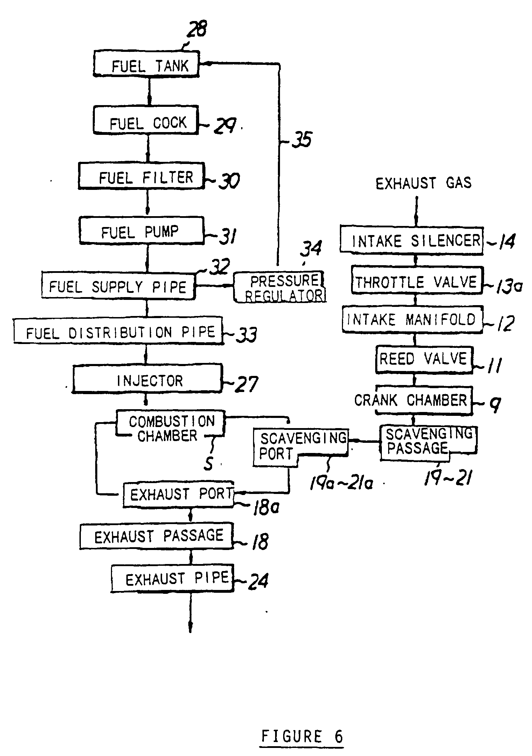

Composition of fuel supplying device for supplying fuel to each injector 27 will now be described in reference to FIG. 2 and FIG. 6.

FIG. 2 shows a fuel tank 28, and a fuel cock 29 disposed at the bottom of the fuel tank 28. A fuel filter 30. a fuel pump 31 and a fuel delivery pipe 32 are connected to the fuel cock 29 one after another. Fuel in the fuel tank 28 is drawn to the fuel pump 31 through the fuel cock 29 and the fuel filter 30, pressurized by the fuel pump 31, and supplied to each injector 27 trough the fuel delivery pipe 32 and fuel distribution pipe 33.

The fuel delivery pipe 32 is provided with a pressure regulator 34 for adjusting pressure of fuel for each injector 27 to a predetermined value, and surplus fuel not injected by the injectors 27 is returned to the fuel tank 28 through the pressure regulator 34 and a fuel return passage 35.

Composition of a controlling system in the 2-cycle engine 1 will now be described with reference to FIG. 1.

FIG. 1 shows a engine control unit 36 (hereafter abbreviated as ECU), and various sensors for detecting running state of the 2-cycle engine 1 electrically connected to the ECU 36. That is to say, to the ECU 36 are respectively electrically connected a throttle opening sensor 37 for detecting the opening of throttle valve 13a from the twisted amount of a throttle grip 15, an engine revolution sensor 38 for detecting the revolution of the crank shaft 6. a crank angle sensor 39 for detecting the rotary angle of the crank shaft 6. a cylinder internal pressure sensor 40 for detecting internal pressure of the cylinder 3. a knocking sensor 41 for detecting combustion state of fuel-air mixture in the combustion chamber S. a crank chamber internal pressure sensor 42 for detecting internal pressure of the crank chamber 9, an intake pressure sensor 43 for detecting the intake pressure, an intake temperature sensor 44 for detecting the intake temperature, an exhaust pressure sensor 45 for detecting the exhaust pressure and an exhaust temperature sensor 46 for detecting the exhaust temperature.

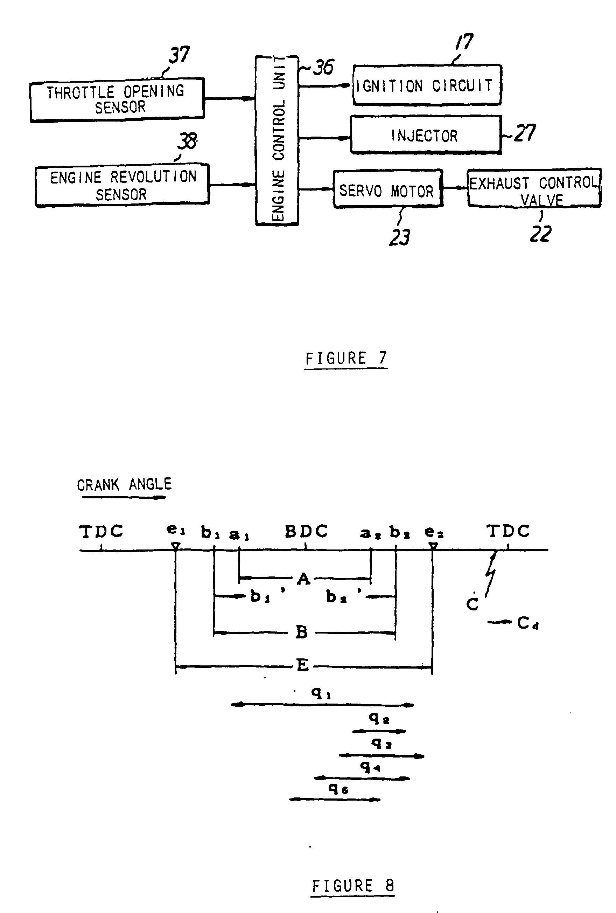

The ECU 36 outputs control signals to the ignition circuit 17, injectors 27 and servo motor 23 respectively in response to the running state of 2-cycle engine 1 detected by the various sensors 37-46 described above, particularly to the load detected by the throttle opening sensor 37 and the revolution of the engine detected by the engine revolution sensor 38 as shown in FIG. 7. Also, ECU controls respective ignition timing, fuel injection timing, fuel injection duration (amount of injected fuel) and exhaust timing in an optimum manner.

Next, the operating process of 2-cycle engine 1 will be described.

In the compression stroke when the 2-cycle engine 1 is started, a piston 4 moves in the cylinder 3 upwardly from the bottom dead center (BDC) to the top dead center (TDC), fresh air (outside air) is led by negative pressure generated in the crank chamber 9 to flow into the crank chamber 9 through the intake silencer 14, the throttle body 13, the inlet manifold 12 and the reed valve 11 as shown in FIG. 6. Fresh air drawn into the crank chamber 9 then undergoes primary compression as the piston 4 moves from the top dead center to the bottom dead center in the succeeding expansion stroke.

In the expansion stroke at middle to high loads, as shown in FIG. 8, when exhaust port 18a starts to be uncovered at a timing b₁ in each cylinder, the exhaust blow-down starts so that high temperature, high pressure exhaust gas produced from fuel-air mixture in the combustion chamber S is discharged from the exhaust port 18a to the exhaust passage 18. When scavenging ports 19a-21a open at a later timing a₁, fresh air in the crank chamber 9 compressed primarily in the previous cycle flows from the scavenging ports 19a-21a into the cylinder 3 through the scavenging passages 19-21, and the scavenging forces the exhaust gas in the cylinder 3 out through the exhaust port 18a to the exhaust passage 18. In FIG. 8. e₁ indicates timing when the injector 27 is uncovered to the cylinder 3, and e₂ indicates timing when the injector 27 is covered by the piston 4. Also shown here are that an opening duration A of the scavenging ports 19a-21a, an opening duration B of the exhaust port 18a and a limited duration E of the fuel injection, respectively.

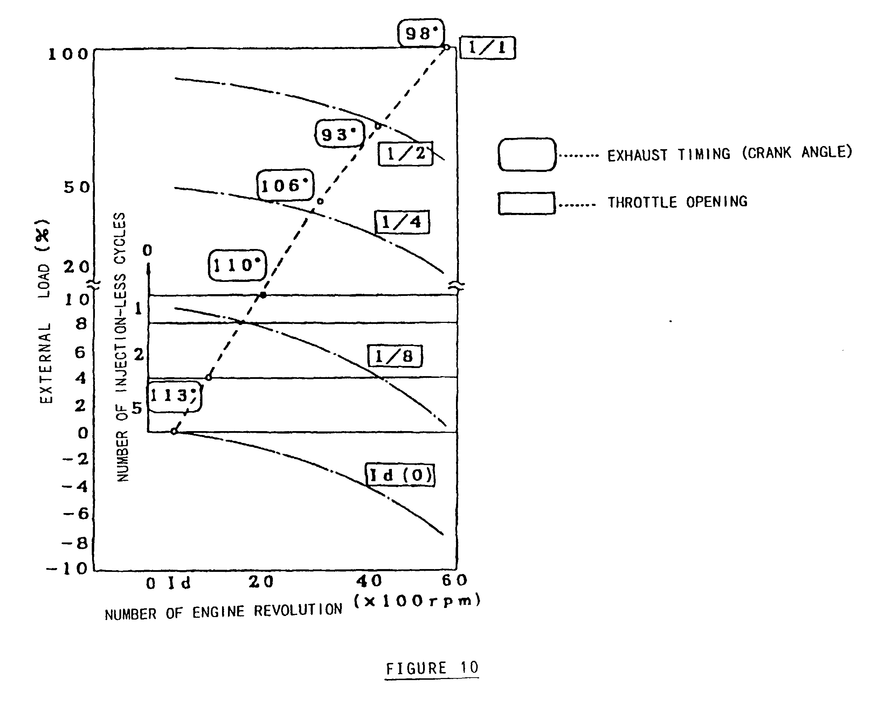

In the 2-cycle engine 1 relating to the embodiment of the invention, intermittent injection is carried out for improving the combustion at low loads. In that case, as shown in FIG. 10, exhaust timing angle is delayed in the low loading range, and fuel injection timing angle is advanced. In FIG. 10, the symbol Id denotes the idling state.

Control methods of exhaust timing by exhaust timing control device will be described here.

As described above, the ECU 36 controls the operation of the servo motor 23 to open and close the exhaust control valve 22 using the engine revolution detected by the engine revolution sensor 38 and engine load (opening of the throttle valve 13a) detected by the throttle opening sensor 37 as parameters. Also. ECU controls exhaust timing as follows.

FIG. 10 shows the diagram of an external load over the number of engine revolutions. The external load comprises resistance of air, slope weight of the vehicle (or resistance of water in ships), resistance of acceleration, resistance of rolling friction, etc.

As shown in Fig. 10, the exhaust timing is advanced in high speed, load range by widening the opening of the exhaust control valve 22, and exhaust timing is delayed in low speed, load range by narrowing the opening of the exhaust control valve 22. That is to say, in consequence of the delayed exhaust timing in low speed, load range as shown in FIG. 10, the timing bi for opening the exhaust port 18a shifts to the direction of an arrow mark b₁' in FIG. 8, timing b₂ for closing the exhaust port 18a advances or shifts to the direction of an arrow mark b₂' in FIG. 8. As a result, opening duration B of the exhaust port 18a will shorten.

Here, relationship between the opening of exhaust control valve 22 and the exhaust timing will be described. When the exhaust control valve 22 is in fully opened state as shown in FIG. 3, exhaust will be started at the point of exhaust stroke that piston 4 moves down and the head of the piston reaches the upper edge of the exhaust port 18a. However, as the exhaust control valve 22 closes from the fully opened state and blocks up the upper part of the exhaust port 18a, exhaust timing is delayed as the time point when the exhaust port 18a starts to be uncovered by piston 4 is delayed. Therefore, exhaust timing will be the fastest when the exhaust control valve 22 is fully opened. And. exhaust timing is more delayed as the exhaust control valve 22 closes and its opening gets smaller, so the exhaust timing will become the most delayed at fully closed state of the exhaust valve 22.

In the 2-cycle engine 1 relating to this embodiment, fuel is injected directly into each cylinder 3 by the injector 27, and the ECU 36 performs optimum control of the fuel injection timing in response to revolution and load of the engine by outputting driving signals to the injectors 27. As shown in FIG. 10, intermittent injection (a method to inject fuel into each cylinder not in every cycle but once in several cycles) is done in without the low load range. In that case, the number of intermissions (number of cycle without fuel injection) of injection is increased with the decrease in load, and exhaust timing is delayed with the increase in the number of intermissions. Also, the wider the throttle opening and the larger the number of engine revolution at a given throttle opening, the greater the number of intermissions.

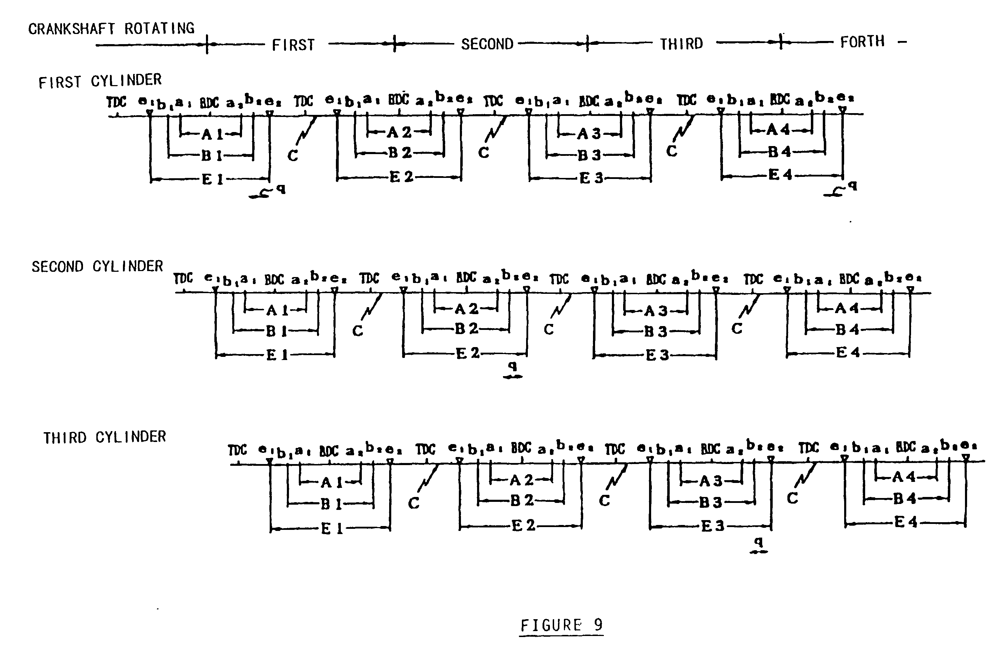

Now. FIG. 9 shows fuel injection timing and ignition timing at each cylinder (the first through third cylinder) when the number of intermissions is 2 at low loads between 4%-8%, that is to say, when fuel injection is processed once in three cycles (three turns of the crank shaft 6). As shown in the FIG. 9. positions of the bottom dead centers (BDC) are spaced at 120 degrees among the fist, second, and third cylinders.

Fuel is injected once in three turns of the crank shaft 6 (intermittent injection) in each cylinder. In that case, because amount of fuel per one injection is large in the intermittent injection at low loads, and, for mixing fuel and fresh air well before mixture is ignited and combusted, fuel injection timing from the injector 27 into cylinder 3 is advanced. That is to say, as shown in FIG. 9, fuel injection is started at a low load at a timing earlier than a timing b₂ for closing the exhaust port 18a, and fuel injection is finished just before a timing e₂ when the injector 27 is covered by the piston 4. In FIG. 9, the symbol q indicates the fuel injection duration. A1-A4 the opening duration of scavenging ports 22a-24a in respective cycles (number of turns of the crank shaft 6). B1-B4 the opening duration of the exhaust ports 21a, E1-E4 the fuel injection limiting period.

When fuel is injected from the injector 27 directly into the cylinder 3 as above, fuel is directed toward the ignition plug 16 from one 27a of fuel injection holes (see FIG. 5) formed in the injector 27 to form an upward injection flow X as shown in FIG. 3, and fuel is also directed toward the head of the piston 4 to form a downward injection flow Y.

Injected fuel forming upward injection flow X and downward injection flow Y in the cylinder 3 as described above is mixed with scavenging air (fresh air) to generate swirls and tumbles in the cylinder 3, and air-fuel mixture is formed as a result.

After that, as the piston 4 moves on to the compression stroke moving upwardly to the top dead center after passing the bottom dead center, the scavenging ports 19a-21a are covered at first with a timing a₂ shown in FIG. 9. and then the exhaust port 18a is covered at a timing b₂.

When the scavenging ports 19a-21a and the exhaust port 18a are covered as described above, fuel-air mixture in the cylinder 3 is compressed by the piston 4. The compressed fuel-air mixture is ignited by ignition plug 16 at timing C just after the top dead center as shown in FIG. 9 and combusted.

High temperature, high pressure exhaust gas generated by the combustion of fuel-air mixture is discharged to the exhaust passage 18 through the exhaust port 18a during the exhaust stroke as described above.

The same process as described above is repeated hereafter, so that the 2-cycle engine 1 runs continuously.

In the embodiment described above for carrying out the intermittent injection in which the amount of fuel injected in one cycle is large, fuel injection timing is advanced in the low load range so that mixing of fuel with fresh air is facilitated to form uniform fuel-air mixture, and the engine performance including improvement of exhaust gas characteristic is improved by stabilizing the combustion in the low load range. In the low load range, exhaust timing is delayed to cover the exhaust port 18a earlier, so that blowby of uncombusted fuel to the exhaust port 18a is prevented, and fuel economy is reduced.

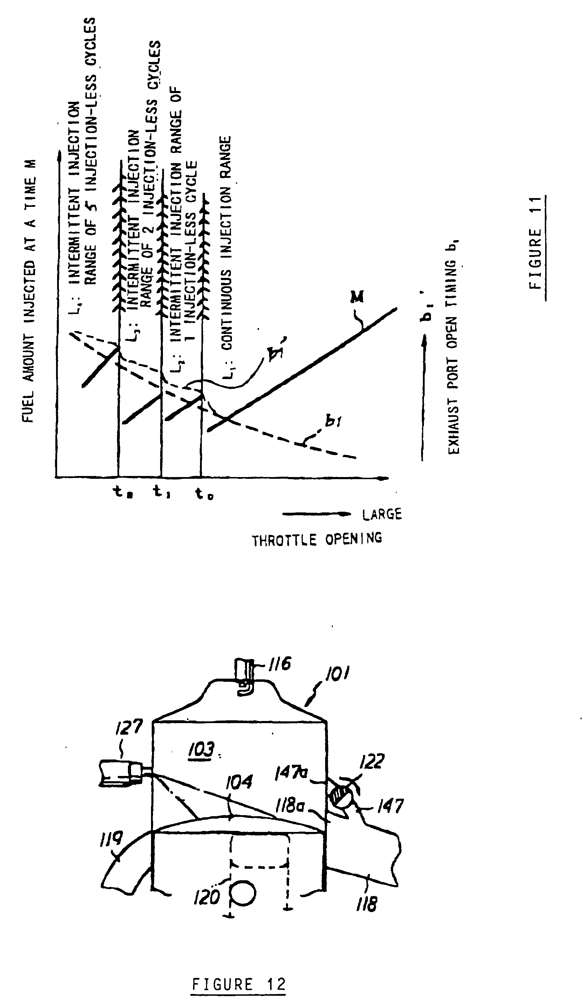

FIG. 11 is a timing chart showing fuel injection condition and exhaust port opening timing plotted against throttle opening.

Fig. 11 is provided for appending as a way of example an exhaust start timing curve b₁ in which the exhaust start timing is delayed more at smaller throttle opening sides from the respective given openings tₒ, t₁, t₂, in addition to correction of errors in writing (the number of injectionless cycles is set at five for L4 area, and a dashed line is designated by symbol b'₁).

The load range is divided into the low load range and the high load range at the throttle opening to. and the fuel injection amount per one injection is made greater in the low load range than in the high load range so as to avoid sudden change in the engine speed between the two load ranges. In the throttle opening range where the throttle opening is less than the throttle opening t₀, namely in the low load range, the number of cycles without fuel injection is changed at the throttle openings t₁ and t₂ respectively. In the same way, the fuel injection amount is made larger in the lower load range than in the higher load range at the throttle opening boundaries t₁ and t₂, respectively. In a given injection range, the amount of fuel injected is reduced with the decrease in the load.

On the other hand, exhaust port opening timing bi is delayed with the decrease in the throttle opening.

As shown in FIG. 8, fuel injection q₁ in the high loading range has larger amount of injection (longer injection period) than fuel injection q₂ in the vicinity of the throttle opening to (however, in the every cycle injection range), and also timing of injection starting is earlier. In medium loading range, the amount of fuel injection is in the intermediate of the fuel injection q₁ in the high loading range and the fuel injection q₂ in the low loading range (however, in the every cycle injection range), and also timing of injection starting is in the middle of both.

When the throttle opening is less than t₀, the amount of injected fuel is increased as shown in FIG. 11. That is to say, the amount of injected fuel is made to one of fuel injection q₁, q₂ and q₃. They are all the same in the amount of injected fuel (length of injection period) and different in injection start timing. In an engine in which less blowby occurs, for example, in an engine in which injecting direction of injector is away from the exhaust port (injector is arranged to inject as shown with X in FIG. 3), it is possible to advance the injection timing slightly such as the fuel injection q₃ shown in FIG. 8, so that the injected fuel can be vaporized and mixed before ignition timing C to reduce the amount of fuel mixed in the blowby fresh air due to too early time of injection to form rich mixture around ignition plug 16 by directing the injection direction toward the ignition plug 16 as indicated with mark X in FIG. 3, to cause premixed combustion which is or almost is stratified combustion, and to purify exhaust gas and improve fuel economy by stabilized combustion in the low load range.

In the case the injection finish timing is delayed without changing fuel injection start timing, combustion period from the ignition timing C to the exhaust starting can be made longer by delaying exhaust timing (changing toward b₁) in comparison with the case of a throttle opening greater than t₀, so that the combustion is made more complete accordingly. To delay exhaust timing makes timing b₂ for closing exhaust port 18a earlier (changing toward b₂), so that blowby of fuel is reduced, and purification of exhaust gas and improvement of fuel economy by stabilized combustion in low loading range are attained.

In the case of delaying injection finish timing without changing fuel injection start timing, enough time may be provided for vaporizing of fuel before the ignition by delaying ignition timing C (changing toward C_{d}) in comparison with the case of a throttle opening greater than t₀, so that the combustion is made more complete accordingly, and purification of exhaust gas and improvement of fuel economy by stabilized combustion in low load range are attained. However, too much delay in ignition timing C may cause incomplete combustion in combustion stroke before exhaust starting, and poor fuel economy and in sufficient purification of exhaust gas may result.

Even when the throttle opening is changed beyond the value t₁, when fuel injection in higher load range is supposed as q₂ in FIG. 8 (actually, it will be one of the injections q₃-q₅), fuel injection in lower load range is made to be one of the injections q₃-q₅. Also in this case above, purification of exhaust gas and improvement of fuel economy are attained by stabilized combustion in the low load range.

This invention may also be applied to a 2-cycle engine 101 provided with a secondary exhaust passage 147 shown in FIG. 12.

That is to say, FIG. 12 is a schematic sectional side elevation of a 2-cycle engine 101 relating to another embodiment provided with the secondary exhaust passage 147 as described above in addition to the main exhaust passage 118. This secondary exhaust passage 147 is formed above the main exhaust passage 118. One end of the secondary exhaust passage is open at a position above the main exhaust port 118a in cylinder 103 as the secondary exhaust port 147a, and the other end is connected to the main exhaust port 118.

In the secondary exhaust passage 147, a rotary exhaust control valve 122 or an exhaust timing control device is interposed so as to open and close the secondary exhaust passage 147.

Therefore, when the exhaust control valve 122 is operated to open the secondary exhaust passage 147, exhaust stroke is started as the piston 104 reaches the secondary exhaust port 147a so that exhaust timing is advanced. When the exhaust control valve 122 is operated to close the secondary exhaust passage 147, start of exhaust stroke is delayed until the piston 104 reaches the main exhaust port 118a so that the exhaust timing is delayed on the contrary.

Thus, in this 2-cycle engine 101, the intermittent injection is carried out at least at low loads, and then amount of injection fuel is larger than that of every cycles injection fuel.

In that case, uniform mixture is formed as a result of improvement in mixing of fuel with fresh air, while exhaust timing is delayed for preventing blowby of uncombusted fuel to the main exhaust port 118a, and combustion in low load range is stabilized to improve engine performance including exhaust gas characteristic and fuel economy. In FIG. 12, the symbol 104 stands for piston, 116 for ignition plug, 119 and 120 for scavenging ports, and 127 for injector.

In the embodiments as above, the injector 27 is described as disposed on the side wall of the cylinder 3. However, the same effect can be obtained by the same construction in a direct fuel injection 2-cycle engine while disposing the injector 27 on the cylinder head 7.

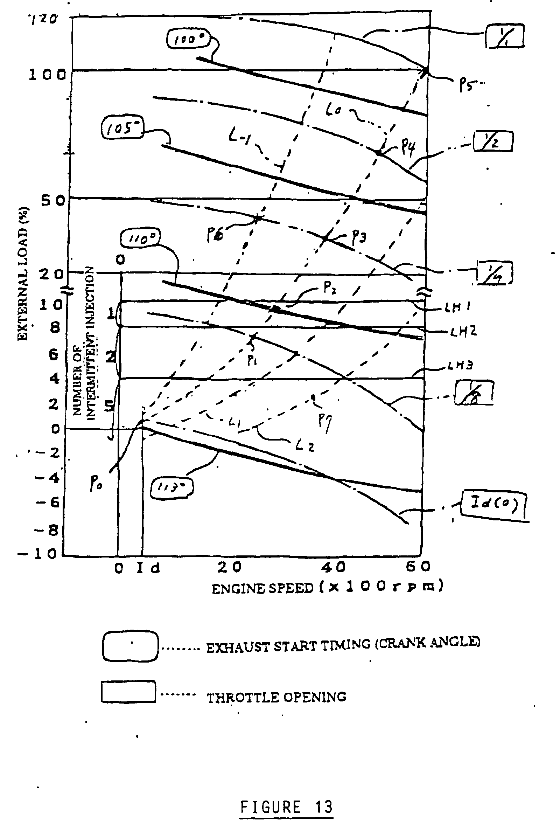

In Fig. 13, point P₅ represents a point at a time that throttle opening is wide-opened when one rider of a certain weight is driving a vehicle of a rated body weight on a horizontal flat road in a forwardly leaning fashion, and the one for an engine output after a stepless speed changer, and an outside resistance (the total of the moving parts friction, wheel rolling resistance, air resistance and slope resistance) at the engine speed of 6000 rpm. This figure shows the relation between the throttle opening, slope of the road, engine speed, outside load, and exhaust start timing, for the outside resistance at point P5 = 100%.

Line Lₒ in the figure shows the relation of the engine speed and the outside load during running on a horizontal flat road. For point Pₒ, when the throttle opening is in a state of completely closed, the outside load is about 0.7%, and the engine speed is in a state of idle speed. At this time, the exhaust start timing is set to 112.8° before TDC, and no fuel is injected for five of six crankshaft revolutions (the number of thinned out cycles, or injectionless cycles is 5), ie, fuel is injected for one of six revolutions of the crankshaft because the point Pₒ is in an area below the line LH3.

When running on a horizontal flat road, if the throttle opening is increased to 1/8, then the outside load at point P1 on the line Lₒ takes a value of about 7.2%, and the engine speed about 2300 rpm. At this time, the exhaust start timing is set to about 110.7 ° before TDC, and fuel injection is thinned out for two of 3 revolutions of the crankshaft, i.e. fuel is injected for one of 3 revolutions because the point P1 is in an area between line LH2 and line LH3.

Further, when running on a horizontal flat road, if the throttle opening is increased to 7/48, then the outside load at point P₂ on the line Lₒ takes a value of about 9,8%, and the engine speed about 2900 rpm. At this time, the exhaust start timing is set to about 110° before TDC, and fuel injection is thinned out for one of 2 revolutions of the crankshaft, ie. fuel is injected for one of 2 revolutions

Furthermore, when running on a horizontal flat road, if the throttle opening is increased to 1/4, then outside load at point P₃ on the line Lₒ takes a value of about 35%, and the engine speed about 3800 rpm. Yet further, if the throttle opening is increased to 1/2, then the outside load of point P₄ on the line Lₒ takes a value of about 67%, and the engine speed about 5000 rpm. Still further, if the throttle opening is increased to 1/1, then the outside load of point P₅ on the line Lₒ takes a value of about 100%, and the engine speed about 6000 rpm. For point P₃ through P₅, fuel is injected for every revolution of the crankshaft, and the exhaust start timing is set to about 106.5 ° before TDC at P₃, about 102.5 ° at P₄, and about 97° at P₅. Line L₁ in the figure shows the relation of the engine speed and the outside load during running on a downhill road of a slope of 4/100 for example, and L₂ of 8/100, and likewise L-1 of uphill 4/100

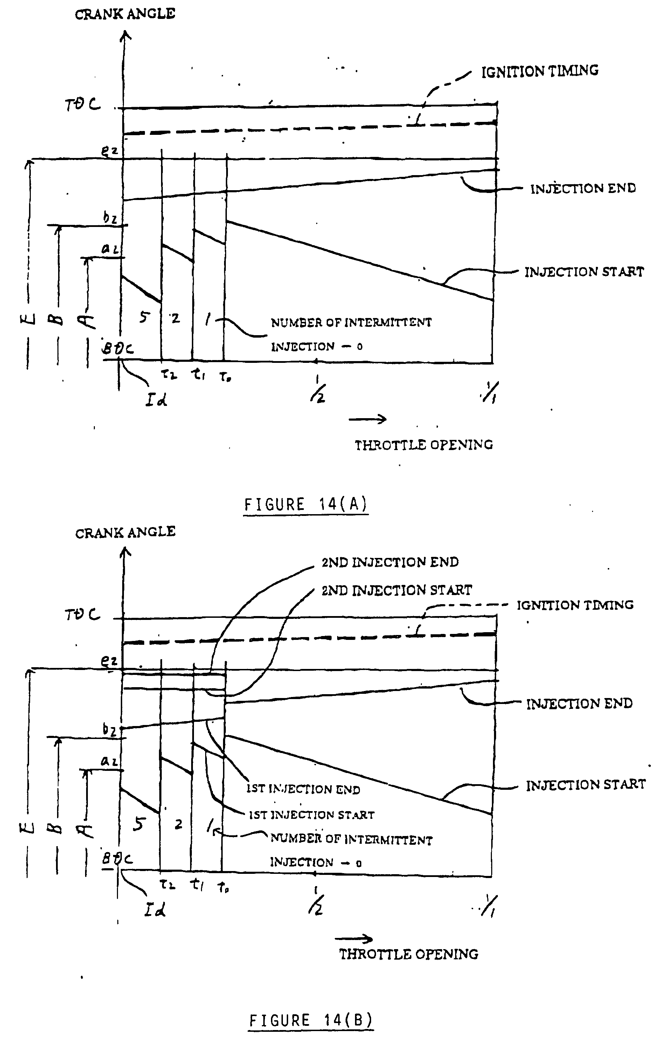

Point P₆ shows a point at the time that the throttle opening is set to 1/4 during running on a uphill road of a slope of 4/100. At this time, the outside load is about 40%, the engine speed about 2300rpm, and the exhaust start timing is set to about 106.5° before TDC. At this point, fuel is injected for every revolution of the crankshaft. Point P7 likewise represents a point at the time that the throttle opening is set to 1/10 during running on a downhill road of a slope of 8/100, and at this time, the outside load is about 2.2%, the engine speed about 3600rpm, and the exhaust start timing is set to about 111.5° before TDC. At this point, the number of injectionless cycles is five in the six revolutions of the crankshaft, and fuel is injected for only one of six crankshaft revolutions. For the fuel injection method in this intermittent injection area, a system of fuel injection for every crankshaft revolution, and the one of fuel injection for a plurality of revolutions are feasible. Fig. 14(A) is a diagram of one embodiment showing the relation between the throttle opening, number of thinned out injection cycles, and the injection timing for one fuel injection for one injecting crankshaft revolution at a constant engine speed, in the fuel injection method in the intermittent injection area, and Fig. 14(B) is a diagram of another embodiment showing the relation between the throttle opening, number of thinned out injection cycles, and injection timings for a plurality of fuel injections (for example two times) in one injecting crankshaft revolution at a constant engine speed, in the fuel injection method in the intermittent injection area.

In Fig. 14 (A), the number of thinned out injection cycles is 0 for the throttle opening larger than a given throttle opening Tₒ, and fuel is injected for every crankshaft revolution. The given throttle opening tₒ, as seen in Fig. 13, becomes larger for a greater downward slope, and becomes smaller for a smaller downward slope and a greater upward slope, depending on the outside load, ie, the slope of the road. According to Fig. 13, tₒ is 1/7 for the engine speed of for example 1800 rpm. This throttle opening enables a rider to drive on a uphill road of a slope of 4/100, and driving on a uphill road of a greater slope is allowed at the engine speed of 1800 rpm for a larger throttle opening than Tₒ. In this case, the number of thinned out injection cycles is 0 for the throttle opening larger than a given throttle opening tₒ, and fuel is injected for every crankshaft revolution. In this area, the injection start timing is advanced further for a larger throttle opening, and at a wide-open throttle opening, injection is started prior to the closing of the scavenging ports 19a-21a. The injection end timing is delayed more for larger throttle opening, and at a wide-open throttle opening, injection is terminated just before the end of the fuel Injection limit time E during which fuel injection is possible. The time from the start of injection till the end of injection is proportional to the amount of fuel injection M for one injection shown in Fig. 11. The throttle opening may be given smaller in running at a constant engine speed of 1800 rpm, for a smaller upward slope; the number of thinned out injection cycles is set at one for the throttle opening between t0 and a given opening t1; and the number of thinned out injection cycles is set at two for the throttle opening between t₁ and a given opening t₂: and the number of thinned out injection cycles is set at five for the throttle opening smaller than t₂. The injection start timing is advanced at smaller throttle opening sides from the respective given opening tₒ, t₁, t₂, while injection endings are set at the almost same timing, so that the amount of fuel for one injection is increased, thereby preventing decreased engine output due to the increased number of injectionless cycles. In addition, as a result of advancing the ignition start timing and accordingly of extending the period from injection to ignition, the vaporization of the injected fuel can be promoted, so that an appropriate mixture can be formed reliably prior to ignition. The exhaust start timing, as shown in Fig. 11 and Fig. 13, is delayed in response to the increased number of injectionless cycles, and the compression ratio is increased by advancing the timing of exhaust port closing in the upward piston stroke, and further, residual gas generated by ignited injection fuel during crank revolution is reduced through the thinned out cycles, thereby effecting stable engine speed and purification of exhaust emissions as well as improved fuel consumption.

In Fig. 14 (B). the injection start timing of the first injection in the intermittent injection area, is advance at smaller throttle opening sides from the respective given openings tₒ, t₁, t₂, and the injection end timing is advanced at the given opening tₒ, but the injection end timings are set at the almost same value at the given openings t₁ and t₂. For the second injection, the injection start and injection end timings are set at all times at a constant value in the intermittent injection area. This second injection is effective when part of or the entire injection is directed toward the ignition plug 16, and allows the formation of a rich mixture around the ignition plug 16 at the time of ignition, which enables layered combustion.

In a memory (not shown) are stored two kinds of three-dimensional maps of the digitized data corresponding to those in Fig. 10, one for providing the values of the exhaust start timing corresponding to the two-dimensional points of throttle opening and engine speed, and the other for providing the number of injectionless cycles corresponding to the two-dimensional points of throttle opening and engine speed. Further, in the memory (not shown) are also stored three-dimensional maps of the digitized data corresponding to those in Fig 14(A) or Fig. 14(B) for providing the values of the injection start, injection end, and ignition timings corresponding to the two-dimensional points of throttle opening and engine speed.

When a driver gives a throttle opening through the throttle grip 15, the engine 1 revolves at a speed such that output and outside load are balanced. The control device 36 in Fig. 7 captures the data of throttle opening and engine speed for every minute given time, and determines the values of the ignition timing, number of injectionless cycles, injection start, injection end, and exhaust start timings, to control the ignition circuit 17, the injector 27, and the servomotor 23.

As is clear from the above description, on fuel injected 2-cycle engine in which fuel is injected directly into the cylinder in every cycle or intermittently at least at low loads, fuel injection start timing is advanced at least at low loads, so that such effects can be obtained as stabilized combustion with improved vaporization and mixing of fuel at low loads and while improving exhaust gas characteristic and fuel economy in low engine load range.

## Claims

1. Method of controlling the operation of an internal combustion engine of the two-stroke cycle and direct fuel injection type, wherein at least in a low load range below a predetermined first load boundary (t₀) fuel is intermittently or once in a plural number of cycles, respectively, injected, wherein in a high load range above said first load boundary (t₀) fuel is injected in every cycle, wherein at least in the vicinity below said first load boundary (t₀) the amount of the injected fuel per injection cycle is larger than the amount of injected fuel per cycle in the vicinity but above said first load boundary (t₀),
**characterized in that**
the fuel injection start timing is variably controlled below said first load boundary (t₀) such that the fuel injection start timing is advanced with respect to the fuel injection start timing above said first load boundary (t₀).

2. Method according to claim 1, **characterized in that** the exhaust timing is controlled such that the exhaust timing below said first load boundary (t₀) is delayed with respect to the exhaust timing above said first load boundary (t₀).

3. Method according to claim 2, **characterized in that** the number of cycles without fuel injection below the first load boundary (t₀) is increased with the decrease in the load, and that the exhaust timing is delayed with the increase in the number of cycles without fuel injection.

4. Method according to claim 3, **characterized in that** the smaller the throttle opening and the higher the engine revolution at a given throttle opening, the more is delayed the exhaust timing with the increase in the number of cycles without fuel injection.

5. Method according to at least one of the preceding claims 1 to 4, **characterized in that** the number of cycles without fuel injection below a predetermined second load boundary (t₁, t₂), which is below said first load boundary (t₀), is controlled to be larger than the number of cycles without fuel injection between the first and second load boundaries (t₀; t₁, t₂).

6. Method according to claim 5, **characterized in that** the amount of injected fuel in the vicinity but below said second load boundary (t₁, t₂) is controlled to be larger than the amount of injected fuel in the vicinity but above said second load boundary (t₁, t₂).

7. Method according to claim 5 or 6, **characterized in that** the fuel injection start timing is variably controlled below said second load boundary (t₁, t₂) such that the fuel injection start timing is advanced with respect to the fuel injection start timing above said second load boundary (t₁, t₂).

8. Method according to at least one of the preceding claims 5 to 7, **characterized in that** the exhaust timing below said second load boundary (t₁, t₂) is delayed with respect to the exhaust timing above said second load boundary (t₁, t₂).

9. Method according to at least one of the preceding claims 1 to 8, **characterized in that** the internal combustion engine is controlled according to detected engine operating conditions.

10. Method according to claim 9, **characterized in that** these engine operating conditions at least comprising the load and the speed of the internal combustion engine.

11. Internal combustion engine (1) of the two-stroke cycle and direct fuel injection type, comprising a control means (17, 36) adapted to inject fuel at least in a low load range below a predetermined first load boundary (t₀) intermittently or once in a plural number of cycles, respectively, and above said first load boundary (t₀) in every cycle, wherein said control means (17, 36) further is adapted to control at least in the vicinity below said first load boundary (t₀) the amount of injected fuel to be larger than the amount of injected fuel in the vicinity but above said first load boundary (t₀),
**characterized in that**
the fuel injection start timing is variably controllable below said first load boundary (t₀) such that the fuel injection start timing is advanced with respect to the fuel injection start timing above said first load boundary (t₀).

12. Internal combustion engine according to claim 11, **characterized in that** the exhaust timing is controllable by an exhaust control valve (22) such that the exhaust timing below said first load boundary (t₀) is delayed with respect to the exhaust timing above said first load boundary (t₀).

13. Internal combustion engine according to claim 12, **characterized in that** the number of cycles without fuel injection below the first load boundary (t₀) is increasable with the decrease in the load, and that the exhaust timing is delayable with the increase in the number of cycles without fuel injection.

14. Internal combustion engine according to claim 13, **characterized in that** the smaller the throttle opening and the higher the engine revolution at a given throttle opening, the more is delayable the exhaust timing with the increase in the number of cycles without fuel injection.

15. Internal combustion engine according to at least one of the preceding claims 11 to 14, **characterized in that** the number of cycles without fuel injection below a predetermined second load boundary (t₁, t₂), which is below said first load boundary (t₀), is controllable to be larger than the number of cycles without fuel injection between the first and second load boundaries (t₀; t₁, t₂).

16. Internal combustion engine according to claim 15, **characterized in that** the amount of injected fuel in the vicinity but below said second load boundary (t₁, t₂) is controlled to be larger than the amount of injected fuel in the vicinity but above said second load boundary.

17. Internal combustion engine according to claim 15 or 16, **characterized in that** the fuel injection start timing is variably controlled below said second load boundary (t₁, t₂) such that the fuel injection start timing is advanced with respect to the fuel injection start timing above said second load boundary (t₁, t₂).

18. Internal combustion engine according to at least one of the preceding claims 11 to 17, **characterized by** a crank angle sensor (39) and/or a cylinder intemal pressure sensor (40) and/or a knocking sensor (41) and/or a crank chamber internal pressure sensor (42) and/or an intake pressure sensor (43) and/or an intake temperature sensor (44) and/or an exhaust pressure sensor (45) and/or a throttle opening sensor (37) together with an engine revolution sensor (38) for detecting engine operation conditions on the basis of which said internal combustion engine (1) is controllable by means of an engine control unit (ECU 36).

## Patentansprüche

1. Verfahren der Steuerung des Betriebes einer Brennkraftmaschine des Zweitakt- und Kraftstoff- Direkteinspritztyps, wobei zumindest in einem Niedriglastbereich unterhalb einer vorbestimmten ersten Lastgrenze (t₀) Kraftstoff jeweils periodisch oder einmal in einer Mehrzahl von Takten eingespritzt wird, wobei in einem Hochlastbereich oberhalb der ersten Lastgrenze (t₀) Kraftstoff in jedem Zyklus eingespritzt wird, wobei zumindest in der Nähe unterhalb der ersten Lastgrenze (t₀) die Menge des eingespritzten Kraftstoffes pro Einspritztakt größer als die Menge von eingespritztem Kraftstoff pro Takt in der Nähe, aber oberhalb der ersten Lastgrenze (t₀), ist
**dadurch gekennzeichnet, daß**
der Kraftstoffeinspritz- Startzeitpunkt unterhalb der ersten Lastgrenze (t₀) derart veränderbar gesteuert wird, daß der Kraftstoffeinspritz- Startzeitpunkt in Bezug zu dem Kraftstoffeinspritz- Startzeitpunkt oberhalb der ersten Lastgrenze (t₀) vorgestellt wird.

2. Verfahren nach Anspruch 1, **dadurch gekennzeichnet, daß** der Auslaßzeitpunkt derart gesteuert wird, daß der Auslaßzeitpunkt unterhalb der ersten Lastgrenze (t₀) in Bezug zu dem Auslaßzeitpunkt oberhalb der ersten Lastgrenze (t₀) verzögert ist.

3. Verfahren nach Anspruch 2, **dadurch gekennzeichnet, daß** die Anzahl der Takte ohne Kraftstoffeinspritzung unterhalb der ersten Lastgrenze (t₀) in Bezug zu der Verminderung in der Belastung erhöht wird, und daß der Auslaßzeitpunkt mit dem Anwachsen der Anzahl der Takte ohne Kraftstoffeinspritzung verzögert wird.

4. Verfahren nach Anspruch 3, **dadurch gekennzeichnet, daß** je kleiner die Drosselöffnung und je höher die Motordrehzahl bei einer gegebenen Drosselöffnung ist, desto mehr wird der Auslaßzeitpunkt mit der Zunahme der Anzahl von Takten ohne Kraftstoffeinspritzung verzögert.

5. Verfahren nach zumindest einem der vorhergehenden Ansprüche 1 bis 4, **dadurch gekennzeichnet, daß** die Anzahl von Takten ohne Kraftstoffeinspritzung unterhalb einer vorbestimmten, zweiten Lastgrenze (t₀), die unterhalb der ersten Lastgrenze (t₀) ist, gesteuert wird, um größer als die Anzahl der Takten ohne Kraftstoffeinspritzung zwischen der ersten und zweiten Lastgrenze (t₀; t₁, t₂) zu sein.

6. Verfahren nach Anspruch 5, **dadurch gekennzeichnet, daß** die Menge von eingespritztem Kraftstoff in der Nähe, aber unterhalb der zweiten Lastgrenze (t₁, t₂) gesteuert wird, um größer als die Menge von eingespritztem Kraftstoff in der Nähe, aber oberhalb der zweiten Lastgrenze (t₁, t₂) zu sein.

7. Verfahren nach Anspruch 5 oder 6, **dadurch gekennzeichnet, daß** der Kraftstoffeinspritz- Startzeitpunkt unterhalb der zweiten Lastgrenze (t₁, t₂) derart veränderbar gesteuert wird, daß der Kraftstoffeinspritz- Startzeitpunkt in Bezug zu dem Kraftstoffeinspritz- Startzeitpunkt oberhalb der zweiten Lastgrenze (t₁, t₂) vorverstellt ist.

8. Verfahren nach zumindest einem der vorhergehenden Ansprüche 5 bis 7, **dadurch gekennzeichnet, daß** der Auslaßzeitpunkt unterhalb der zweiten Lastgrenze (t₁, t₂) in Bezug zu dem Auslaßzeitpunkt oberhalb der zweiten Lastgrenze (t₁, t₂) verzögert ist.

9. Verfahren nach zumindest einem der vorhergehenden Ansprüche 1 bis 8, **dadurch gekennzeichnet, daß** die Brennkraftmaschine entsprechend der erfaßten Motorbetriebsbedingungen gesteuert wird.

10. Verfahren nach Anspruch 9, **dadurch gekennzeichnet, daß** diese Motorbetriebsbedingungen zumindest die Last und die Drehzahl der Brennkraftmaschine beinhalten.

11. Brennkraftmaschine (1) des Zweitakt- und Kraftstoff- Direkteinspritztyps, mit einer Steuereinrichtung (17, 36), vorgesehen, um Kraftstoff zumindest in einem Niedriglastbereich unterhalb einer vorbestimmten ersten Lastgrenze (t₀) jeweils periodisch oder einmal in einer Mehrzahl von Takten einzuspritzen, und oberhalb der ersten Lastgrenze (t₀) in jedem Takt, wobei die Steuereinrichtungen /17, 36) außerdem vorgesehen sind, um zumindest in der Nähe unterhalb der ersten Lastgrenze (t₀) die Menge des eingespritzten Kraftstoffes zu steuern, um größer als die Menge des eingespritzten Kraftstoffes in der Nähe, aber oberhalb der ersten Lastgrenze (t₀) zu sein,
**dadurch gekennzeichnet, daß**
der Kraftstoffeinspritz- Startzeitpunkt unterhalb der ersten Lastgrenze (t₀) derart steuerbar ist, daß der Kraftstoffeinspritz- Startzeitpunkt in Bezug zu dem Kraftstoffeinspritz- Startzeitpunkt oberhalb der ersten Lastgrenze (t₀) vorgestellt ist.

12. Brennkraftmaschine nach Anspruch 11, **dadurch gekennzeichnet, daß** der Auslaßzeitpunkt durch ein Auslaßsteuerventil (22) derart steuerbar ist, daß der Auslaßzeitpunkt unterhalb der ersten Lastgrenze (t₀) in Bezug zu dem Auslaßzeitpunkt oberhalb der ersten Lastgrenze (t₀) verzögert ist.

13. Brennkraftmaschine nach Anspruch 12, **dadurch gekennzeichnet, daß** die Anzahl der Takten ohne Kraftstoffeinspritzung unterhalb der ersten Lastgrenze (t₀) mit der Verminderung der Last erhöht werden kann, und daß der Auslaßzeitpunkt mit der Erhöhung der Anzahl der Takte ohne Kraftstoffeinspritzung verzögerbar ist.

14. Brennkraftmaschine nach Anspruch 13, **dadurch gekennzeichnet, daß** je kleiner die Drosselöffnung und je höher die Mototumdrehung bei einer gegebenen Drosselöffnung, desto mehr kann der Auslaßzeitpunkt mit der Zunahme der Anzahl der Takte ohne Kraftstoffeinspritzung verzögert werden.

15. Brennkraftmaschine nach zumindest einem der vorhergehenden Ansprüche 11 bis 14, **dadurch gekennzeichnet, daß** die Anzahl der Takte ohne Kraftstoffeinspritzung unterhalb einer vorbestimmten zweiten Lastgrenze (t₁, t₂), die unterhalb der ersten Lastgrenze (t₀) ist, so gesteuert wird, daß sie größer ist als die Anzahl der Takte ohne Kraftstoffeinspritzung zwischen der ersten und zweiten Lastgrenze (t₀; t₁, t₂).

16. Brennkraftmaschine nach Anspruch 15, **dadurch gekennzeichnet, daß** die Menge von eingespritztem Kraftstoff in der Nähe , aber unterhalb der zweiten Lastgrenze (t₁, t₂) gesteuert wird, um größer als die Menge des eingespritzten Krafstoffes in der Nähe, aber oberhalb der zweiten Lastgrenze zu sein.

17. Brennkraftmaschine nach Anspruch 15 oder 16, **dadurch gekennzeichnet, daß** der Kraftstoffeinspritz- Startzeitpunkt unterhalb der zweiten Lastgrenze (t₁, t₂) derart veränderbar gesteuert wird, daß der Kraftstoffeinspritz- Startzeitpunkt in Bezug zu dem Kraftstoffeinspritz- Startzeitpunkt oberhalb der zweiten Lastgrenze (t₁, t₂) vorverstellt ist.

18. Brennkraftmaschine nach zumindest einem der vorhergehenden Ansprüche 11 bis 17, **gekennzeichnet durch** einen Kurbelwinkelsensor (39) und / oder einen Zylinderinnendrucksensor (40) und / oder einen Klopfsensor (41) und / oder einen Kurbelkammer- Innendrucksensor (42) und / oder einen Ansaugdrucksensor (43) und / oder einen Einlaßtemperatursensor (44) und / oder einen Auslaßdrucksensor (45) und /oder einen Drosselöffnungssensor (37) zusammen mit einem Motorumdrehungssensor (38) zum Erfassen der Motorbetriebsbedingungen auf deren Basis die Brennkraftmaschine (1) steuerbar mittels einer Motorsteuereinheit (ECU 36) ist.

## Revendications

1. Procédé de commande du fonctionnement d'un moteur à combustion interne du type à cycle à deux temps et à injection directe de carburant, dans lequel, au moins dans une plage de faible charge, au-dessous d'une première limite de charge (t₀) prédéterminée, du carburant est injectée de façon intermittente ou bien à une seule reprise en une pluralité de cycles, respectivement, dans lequel, dans une plage de haute charge au-dessus, ladite première limite de charge (t₀) du carburant est injectée à chaque cycle, dans lequel, au moins à proximité et au-dessous de ladite limite première limite de charge (t₀) la quantité de carburant injectée par cycle d'injection est supérieure à la quantité de carburant injectée par cycle à proximité mais au-dessus de ladite limite première limite de charge (t₀),
**caractérisé en ce que**
le cadencement de début d'injection de carburant est commandé de façon variable au-dessous de ladite première limite de charge (t₀), de manière que le cadencement de début d'injection de carburant soit avancé par rapport au cadencement de début d'injection de carburant que l'on a lorsqu'on est au-dessus de ladite première limite de charge (t₀).

2. Procédé selon la revendication 1, **caractérisé en ce que** le cadencement d'échappement est commandé de manière que le cadencement d'échappement au-dessous de ladite première limite de charge (t₀) soit retardée par rapport au cadencement d'échappement que l'on a au-dessus de ladite première limite de charge (t₀).

3. Procédé selon la revendication 2, **caractérisé en ce que** le nombre de cycles sans aucune injection de carburant, au-dessous de ladite première limite de charge (t₀), est augmenté lorsque la charge diminue, et **en ce que** le cadencement d'échappement est retardé, lorsque le nombre de cycles sans injection de carburant augmente.

4. Procédé selon la revendication 3, **caractérisé en ce que** plus l'ouverture d'étranglement est faible et plus la vitesse de rotation du moteur à combustion est haute pour une ouverture d'étranglement donnée, plus le cadencement d'échappement est retardé avec l'augmentation du nombre de cycles sans injection de carburant.

5. Procédé selon au moins l'une des revendications 1 à 4 précédentes, **caractérisé en ce que** le nombre de cycles sans injection de carburant au-dessous d'une deuxième limite de charge (t₁, t₂) prédéterminée, inférieure à ladite première limite de charge (t₀), est commandé pour être supérieur au nombre de cycles sans injection de carburant entre les première et deuxième limites de charges (t₀; t₁, t₂).

6. Procédé selon la revendication 5, **caractérisé en ce que** la quantité de carburant injecté, à proximité mais au-dessous de ladite première limite de charge, est commandée pour être supérieure à la quantité de carburant injecté, à proximité mais au-dessous de ladite deuxième limite de charge (t₁, t₂).

7. Procédé selon la revendication 5 ou 6, **caractérisé en ce que** le cadencement de début d'injection de carburant est commandé de façon variable lorsqu'on est au-dessous de ladite deuxième limite de charge (t₁, t₂), de manière que le cadencement de début d'injection de carburant soit avancé par rapport au cadencement de début d'injection de carburant au-dessous de ladite première limite de charge (t₁, t₂).

8. Procédé selon au moins l'une des revendications 5 à 7 précédentes, **caractérisé en ce que** le cadencement d'échappement au-dessous de ladite deuxième limite de charge (t₁, t₂) est retardé par rapport au cadencement d'échappement que l'on a au-dessus de ladite première limite de charge (t₁, t₂).

9. Procédé selon au moins l'une des revendications 1 à 8 précédentes, **caractérisé en ce que** le moteur à combustion interne est commandé selon les conditions détectées de fonctionnement du moteur à combustion.

10. Procédé selon la revendication 9, **caractérisé en ce que** ces conditions de fonctionnement du moteur à combustion comprennent au moins la charge et la vitesse de rotation du moteur à combustion.

11. Moteur à combustion interne (1) du type à cycle à deux-temps et à injection de carburant, comprenant des moyens de commande (17, 36) adaptés pour injecter du carburant au moins dans une plage de faible charge au-dessous d'une première limite de charge (t₀) prédéterminée, de façon intermittente ou à une première reprise, en une pluralité de cycles, respectivement, et au-dessus de ladite première limite de charge (t₀) dans chaque cycle, dans lequel lesdits moyens de commande (17, 36) sont en outre adaptés, pour commander au moins à proximité au-dessous de ladite première limite de charge (t₀), la quantité de carburant injectée, pour qu'elle soit supérieure à la quantité de carburant injectée lorsqu'on est à proximité, mais au-dessus de ladite première limite de charge (t₀),
**caractérisé en ce que**
le cadencement de début d'injection est susceptible d'être commandé de façon variable au-dessous de ladite première limite de charge (t₀) de manière que le cadencement de début d'injection de carburant soit avancé par rapport au cadencement de début d'injection de carburant au-dessus de ladite première limite de charge (t₀).

12. Moteur à combustion interne selon la revendication 11, **caractérisé en ce que** le cadencement d'échappement est susceptible d'être commandé à l'aide d'une valve de commande d'échappement (22), de manière que le cadencement d'échappement au-dessous de ladite première limite de charge (t₀) soit retardé par rapport au cadencement d'échappement au-dessus de ladite première limite de charge (t₀).

13. Moteur à combustion interne selon la revendication 12, **caractérisé en ce que** le nombre de cycles sans injection de carburant, au-dessous de ladite première limite de charge (t₀), est susceptible d'être augmenté avec augmentation de la charge, et **en ce que** le cadencement d'échappement est susceptible d'être retardé avec l'augmentation du nombre de cycles sans injection de carburant.

14. Moteur à combustion interne selon la revendication 13, **caractérisé en ce que**, lorsque l'ouverture d'étranglement diminue et que la vitesse de rotation du moteur à combustion augmente pour une ouverture d'étranglement donnée, le cadencement d'échappement est susceptible d'être retardé lorsqu'augmente le nombre de cycles sans injection de carburant.

15. Moteur à combustion interne selon au moins l'une des revendications 11 à 14 précédentes, **caractérisé en ce que** le nombre de cycles sans injection de carburant au-dessous d'une deuxième limite de charge (t₁, t₂) prédéterminée, qui est inférieure à ladite première limite de charge (t₀), est susceptible d'être commandé pour être supérieur au nombre de cycles sans injection de carburant entre les première et deuxième limites de charge (t₀; t₁, t₂).

16. Moteur à combustion interne selon la revendication 15, **caractérisé en ce que** la quantité de carburant injectée, à proximité mais au-dessous de ladite deuxième limite de charge (t₁, t₂), est commandée pour être supérieure à la quantité de carburant injectée, à proximité mais au-dessus de ladite deuxième limite de charge.

17. Moteur à combustion interne selon la revendication 15 ou 16, **caractérisé en ce que** le cadencement de début d'injection de carburant est commandé de façon variable au-dessous de ladite deuxième limite de charge (t₁, t₂), de manière que le cadencement de début d'injection de carburant soit avancé par rapport au cadencement de début d'injection de carburant au-dessus de ladite deuxième limite de charge (t₁, t₂).

18. Moteur à combustion interne selon au moins l'une des revendications 11 à 17 précédentes, **caractérisé par** un capteur d'angle de vilebrequin (39) et/ou un capteur de pression interne en cylindre (40) et/ou un capteur de cognement (41) et/ou un capteur de pression interne en chambre de vilebrequin (42) et/ou un capteur de pression d'admission (43) et/ou un capteur de température d'admission (44) et/ou un capteur de pression d'échappement (45) et/ou un capteur d'ouverture d'étranglement (37), conjointement avec un capteur de vitesse de rotation de moteur à combustion (38), pour détecter les conditions de fonctionnement du moteur sur la base desquelles ledit moteur à combustion interne (1) peut être commandé au moyen d'une unité de commande de moteur à combustion (UCM 36).
